# EUROPEAN PATENT SPECIFICATION

(11) **EP 2 360 423 B1**
(45) Date of publication and mention of the grant of the patent: **27.11.2019**
(21) Application number: 11155111.5
(22) Date of filing: 18.02.2011
(51) Int. Cl.: F21S 41/00

(54) **LIGHT SIGNALING DEVICE FOR VEHICLES, MOUNTABLE ON BOARD WITH DIFFERENT INCLINATIONS**
AN BORD EINES FAHRZEUGES MONTIERBARE LICHTSIGNALGEBUNGSVORRICHTUNG MIT VERSCHIEDENEN NEIGUNGSGRADEN
FEU DE SIGNALISATION AUTOMOBILE MONTABLE À BORD DU VÉHICULE SELON DIFFÉRENTES INCLINAISONS

(30) Priority: 18.02.2010 IT TO20100121
(43) Date of publication of application: 24.08.2011
(73) Proprietor: Automotive Lighting Italia S.p.A., 10078 Venaria Reale (Torino) (IT)
(72) Inventor: Pairetti, Alberto, 10040 Caselette (IT); Zattoni, Sergio, 10070 Cafasse (IT); Masuelli, Stefania, 10046 Rivalta di Torino (IT); Alaimo, Jacopo, 10070 Cafasse (IT)
(74) Representative: Bergadano, Mirko

(56) References cited:
- EP-A1- 2 101 105
- EP-A2- 1 039 214
- DE-A1-102006 008 191
- US-A1- 2002 024 822
- US-A1- 2002 053 878
- US-A1- 2004 156 209
- US-A1- 2004 222 947
- US-A1- 2006 028 829
- US-B1- 7 237 936

## Description

The present invention relates to a DRL light (acronym of Daylight Running Lamp).

It is known that a lighting or light signalling device comprises a body closed at the front by an either clear or prismed (i.e. having prisms) lens, containing one or more light sources (incandescent, halogen, discharge, LED bulbs etc.) and an appropriate optical system.

Over the past years, the introduction of a new vehicle signalling function, called DRL, as been observed. Such lighting devices are kept on during the day to increase visibly of the vehicle by other road users, such as pedestrians and vehicles.

As the other headlights and lamps, the DRL consists of a white (or yellow) light source, typically one or more LED sources, an optical system (either of reflection kind or of transmission kind) and a body provided with a front closing lens, often constituted by the body of the main/dipped beam headlight, or if the DRL is separated from the headlight, by an external element or separate body.

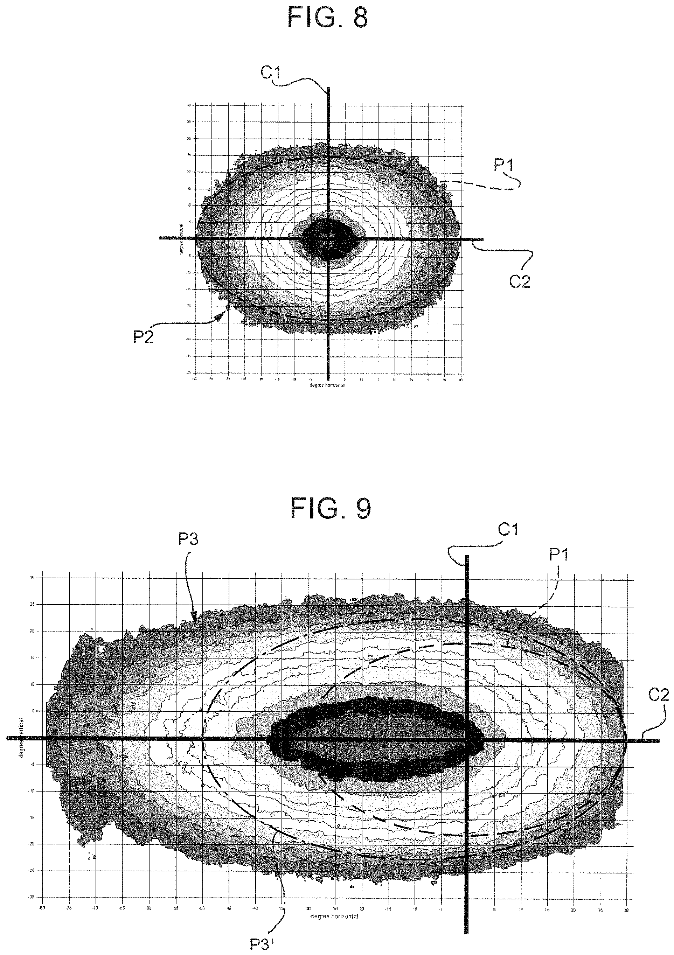

Usually, the DRL is specifically designed for each vehicle and displays (with reference to figures 8-11) of the appended drawings) an elliptic "photometric pattern" P1, which closely depends on the mounting position of the light device, and which must have width and light intensity features such as to fulfill a predetermined light distribution law established by international standards.

Hereinafter, "photometric pattern" or "photometric projection" is the pattern projected by light emissions emitted by the headlight or lamp on a flat screen placed at a predetermined distance (established by international standards) in front of the headlight or lamp.

Many vehicle lighting devices are known, which are made by modular elements which contribute, all together, to creating the desired photometric projection, such as, for example, those described in US2002/0024822A1, US7237936B1, US2006/0028829A1, US2002/0053878A1, DE2006008191A1 and EP1039214A2, US2004/0222947 and EP2101105. In all cases, the finally obtained photometric projection meets the requirements of standards only in a very specific mounting position of the device on the vehicle.

It is the object of the present invention to provide a DRL, which can be mounted on a vehicle in a wide number of different positions, obtaining in all cases a photometric projection having the requirements established by law, regardless of the mounting position, thus reducing the development and production costs of the device itself with the consequent economies of scale.

The invention thus relates to a DRL lighting device as defined in claim 1.

In particular, the light signalling device made according to the invention is adapted to generate in use a first photometric projection which has such requirements of width and punctual intensity (defined by the amount of incident light radiations on each point) to fulfill a predetermined light distribution law, defined by the photometric projection required each time by the standards according to the function that the light device must provide. The first main feature thereof consists in that it comprises a plurality of modules, each of which comprises, in turn, a light source and an appropriate OS (optical system), including means, such as primary and/or secondary optical systems, for distributing the radiation emitted by the light source so as to generate, for each module, a second predetermined photometric projection, possibly different from module to module.

According to one main aspect of the invention, such means for distributing the light radiation of each module are designed so that, in combination:
- the second predetermined photometric projection of each module has, along at least one axis of a pair of orthogonal axes defining the laying plane of the photometric projections themselves, a larger width than that required of the first photometric projection along such axis, according to said predetermined law,
- the second photometric projection generated by each module always has a punctual intensity (defined by the amount of incident light radiations on the point) lower than that of the first photometric projection;
- the second photometric projections are at least in part reciprocally overlapped so that all together the modules generate the punctual intensity of the first photometric projection.

According to the invention, the light radiation distribution means provide a DRL function by overlapping the second photometric projections of all the modules, i.e. a first photometric projection having, regardless of the mounting position on the vehicle chosen each time for the light device, width and punctual intensity features such to in all cases fulfill international DRL standards, providing the device is mounted on a vehicle within a predetermined range of possible angular orientations, which are different from one another, of the device itself with respect to a forward axis of the vehicle.

According to an aspect of the invention, such a predetermined range of angular orientations comprises mounting the device laying on a plane transversal, in particular perpendicular, to the forward axis of the vehicle and inclined on such a plane, with respect to the horizontal, by an angle α between 0° and ±180°; or mounting the device laying on a plane transversal to the forward axis of the vehicle and inclined with respect to a plane orthogonal to the forward axis of the vehicle by an angle β comprised between 0 and 45°; or a combination of the two previous positions.

In this manner, an identical light signalling device can be used for a high number of vehicles different from one another, on which the device is intended to be mounted in very different positions and with different angles with respect to the road surface and to the forward axis of the vehicle obtaining in all cases a light distribution which complies with that required by standards.

In actual fact, according to the invention, a light distribution generally wider than that desired is obtained, but the "wasted" light radiation, which is not used for generating the distribution required by the standards, what it will require to make lighting devices which are less efficient than necessary, is compensated by the possible economies of scale.

Further features and advantages of the present invention will be apparent from the following description of non-limitative embodiments, made with reference to the accompanying drawings, in which:
- figure 1 is a mounting diagram of a light device according to the invention, shown only diagrammatically, on a plane orthogonal to the forward axis of the vehicle;
- figure 2 shows a mounting diagram of the light device according to the invention, shown only diagrammatically, on a different plane;
- figures from 3 to 7 show the essential components of different construction embodiments of the light signalling device according to the invention;
- figures 8 and 9 diagrammatically illustrate examples of photometric projections which can be generated by the device according to the invention, in particular when mounted according to the diagrams in figures 1 and 2, respectively; and
- figures 10 and 11 diagrammatically show the operating principle of the device according to the invention.

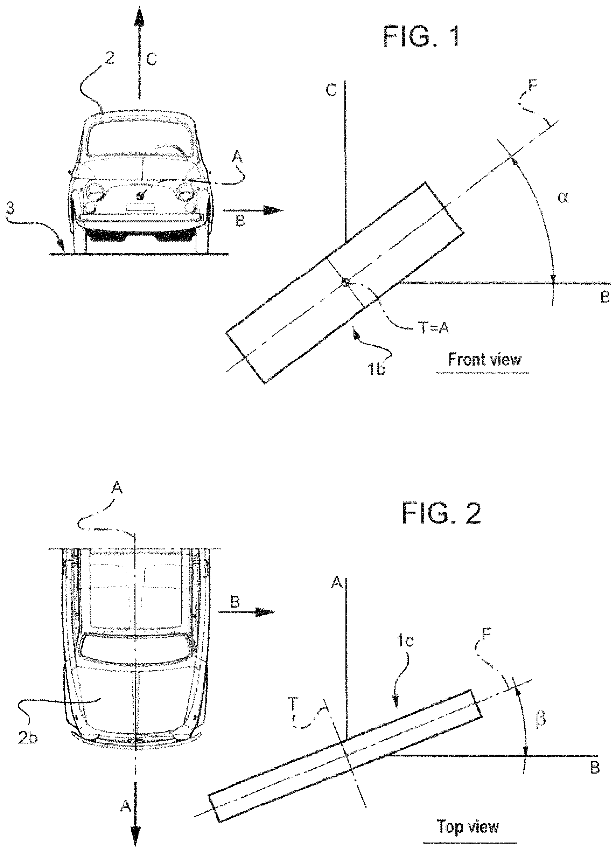

With reference to figures from 1 to 9, numeral 1 indicates as a whole a light device, in particular a light signalling device for vehicles, which can be mounted on a vehicle 2, only diagrammatically shown in figures 1 and 2, having a forward axis of the vehicle coinciding with the longitudinal symmetry axis of the vehicle 2 itself, indicated by A, arranged parallel to a road surface 3.

In particular, device 1 has an optical axis T along the direction to which the emitted light radiations are mainly directed and different types of the device 1 can be predicted according to the invention:
- a device 1b (figure 1) which is mounted on the vehicle 2 so that the device 1b lays on a plane transversal, in particular orthogonal, to axis A of the vehicle (vertical plane coinciding with the plane of the sheet in figure 1), inclined on such a plane by any angle α with respect to the road surface 3 (figure 1), device 1b which is thus diagrammatically illustrated in front elevation view in figure 1;
- a device 1c (figure 2) mounted so that the device 1c lays on a plane transversal to the forward axis A of the vehicle and inclined with respect to a plane B (shown with a dash-and-dotted line in figure 2), which is orthogonal to the forwards axis A of the vehicle, by an angle β comprised between 0 and 45° (with reference to figure 2 and to the vehicle 2b diagrammatically indicated on its left), the device 1c which is diagrammatically shown in top view in figure 2;
- a device (not shown for the sake of simplicity) the installation on the vehicle of which is a combination of the two described above.

In particular, the light signalling device 1b or 1c made according to the invention is adapted to generate in use a first photometric projection P2 or P3 such as to fulfill a predetermined light distribution law, in width and intensity, e.g. an elliptic photometric projection typical of a DRL; the photometric projection P2 or P3 generated by the devices 1b, 1c is shown as a whole in figures 8 and 9, while in the same figures a dashed line indicates a photometric projection P1 which is the one to be obtained in accordance with the international standards and in the creation of which the aforesaid predetermined light distribution law consists.

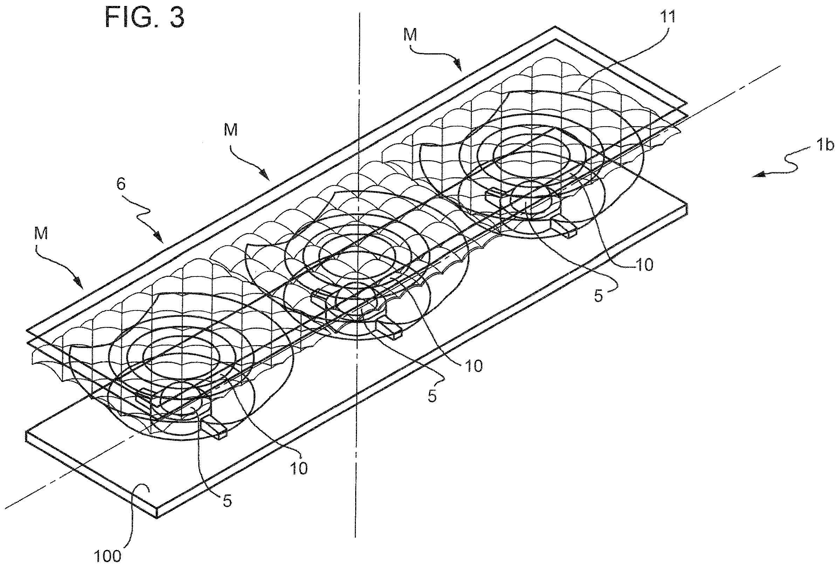

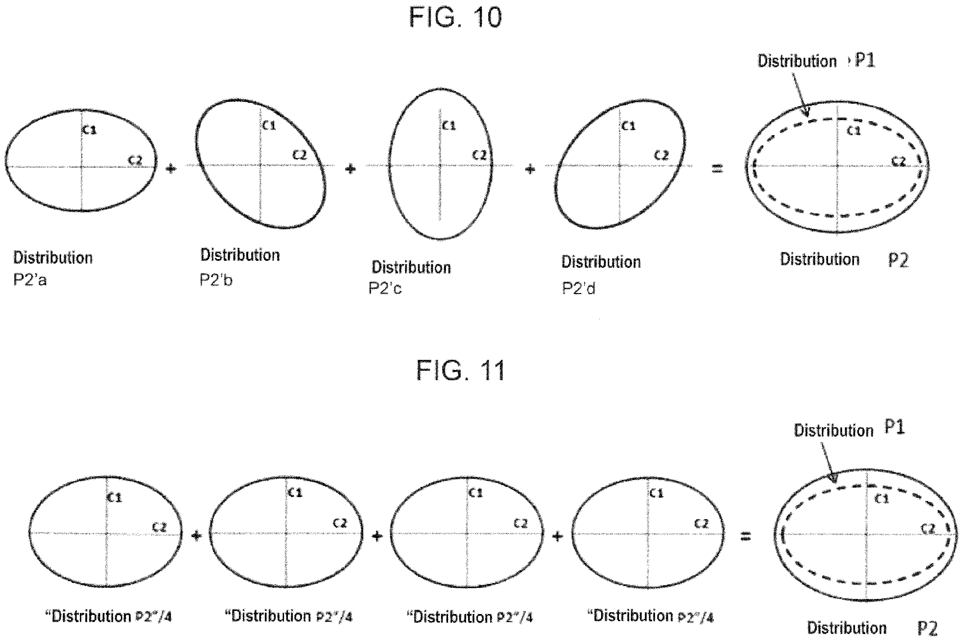

The main features of the devices 1b, 1c consist in that they always comprise a plurality of repeated modules M (figures 3-7), each of which comprising, in turn, a light source 5 and means, indicated as a whole by numeral 6, for distributing the emitted radiation (not shown for the sake of simplicity) from the light source 5 so as to generate, for each module M, either a second predetermined photometric projection P2' or P2", illustrated by way of example in figures 10 and 11, for the modules M belonging to the device 1b, or P3', shown by way of example with a dash-and-dotted line for a single module M in figure 9, for the modules M belonging to device 1c.

Each module M may have a projection direction of the light radiation emitted therefrom which is parallel to the optical axis T and the modules M are arranged aligned side by side along at least one axis F which defines the longitudinal plan dimension of the respective device 1b or 1c.

According to the main aspect of the invention, the means 6 for distributing the light radiation of each module M are designed so that the second predetermined photometric projection P2', P2" or P3' generated by each module M has, along at least one axis of a pair of orthogonal axes C1 and C2 defining the laying plane of the photometric projections P2, P3 themselves (figures from to 11), a width wider than the width along the same axis which would be required, according to the aforesaid predetermined light distribution law, to the first photometric projection P2,P3, i.e. each module M generates a photometric projection having width along at least one of the axes C1,C2 greater than that along the same axis of the photometric projection P1 required by standards.

Furthermore, the means 6 and the light sources 5 are designed to distribute the light radiation of each module M so that the second photometric projection P2', P2" or P3' generated by each module M always has a punctual intensity (defined by the amount of incident light radiations on the point in hand) smaller than that of the overall photometric projection P2,P3 generated by the device in the same point; this effect is obtained not only by means 6 but also by appropriately dimensioning the power of the light sources 5.

Finally, the means 6 are made so that the photometric projections P2', P2" or P3' generated by each module M are at least partially overlapped on one another so that the modules M, all together, generate, point by point, the punctual intensity present in the overall photometric projection P2,P3, thus obtaining an overall lighting power equal to at least part of the sum of the single lighting powers of each source 5.

According to the preferred embodiment of the invention, the sources 5 and the radiation distribution means 6 are adapted to obtain by overlapping the second photometric projections P2',P2" or P3' of all the modules M a DRL function, i.e. a photometric projection P2,P3 adapted to fulfill the international DRL standard, because it is overlapping, totally including, the photometric projection P1, which is precisely that required by the standards. This according to the invention always occurs regardless of the mounting position of device 1b, 1c on the vehicle, providing that the light signalling device 1b or 1c is mounted on a vehicle 2 within a predetermined range of possible angular orientations, different from one another, of the device 1b, 1c itself with respect to the forward axis A of the vehicle.

According to an aspect of the invention, such a predetermined range of angular orientations comprise mounting the device 1b laying on a plane transversal, e.g. perpendicular, to the forward axis A of the vehicle and inclined on such a plane, according to its axis F and with respect to the horizontal, by an angle α comprised in the range from 0° to 180° (figure 1) . Alternatively, device 1c is mounted laying on a plane transversal to the forward axis A of the vehicle and inclined with respect to a plane B orthogonal to the forwards axis A of the vehicle by an angle β comprised between 0° to 45° (figure 2). Alternatively, mounted according to a combination of the previous positions.

According to an aspect of the invention, the number of modules M included in each device 1b or 1c depends on the maximum inclination angle α or β of mounting of the device 1b or 1c on the vehicle 2.

The light radiation distribution means 6 (figures 3-7) possibly comprise primary 10 and secondary 11 optical systems (optical parts) which form, reciprocally in combination, the desired light distribution adapted to generate the photometric projection P2', P2" or P3' for each module M; such optical parts 10 and 11 are chosen from the group consisting in: TIR optics, reflection optics, refraction optics; and combinations thereof. The light source 5 of each module M is chosen in turn from the group consisting of: at least one LED, an array of LEDs, white or yellow incandescent lamps.

For example, figure 3 diagrammatically shows the essential components of a light device 1b made with TIR optical system (acronym of "*Total Internal Reflection*"), wherein the primary optical system of each module M consists of a Fresnel type collimator 10 arranged in front of the respective light source 5 and combined with an array of lenses 11, mounted in front of all modules M and thus in common thereto, to obtain the desired photometric projection P2. Alternatively, the fresnels 10 are adapted to generate the light distribution profile according to the photometric projection P2 alone.

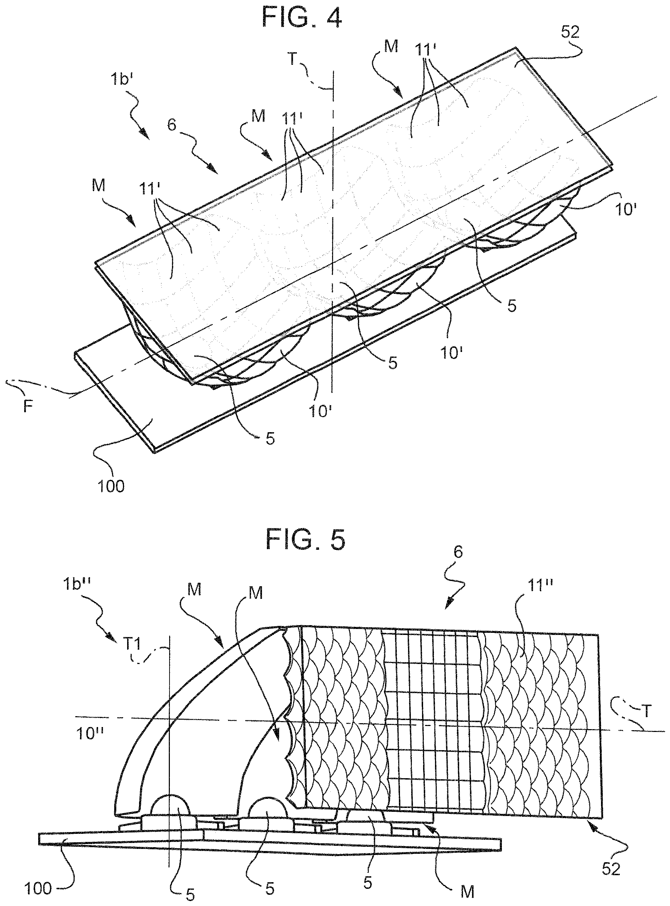

Figure 4 diagrammatically shows a DRL light device 1b' made with reflection optics, wherein the primary optical system of each module M consists of reflectors 10' associated to an external lens 52 in common for all modules M; the widening of the light distribution is obtained by means of an array of facets of variable radius 11' made on the reflectors 10. Alternatively, the reflectors 10 may collimate the light and the light distribution according to the photometric projections P2' in figure 10 or P2" in figure 11 for each module M may be obtained by an array of small lenses (known and not shown) obtained on lens 52, as in the embodiment shown in figure 3.

Figure 5 shows a DRL light device 1b" made by means of a reflection optical system wherein the primary optical system of each module M consists of reflectors 10" and by an outer lens 52 in common with all modules M and wherein the widening of the light distribution is obtained by means of an array of small lenses 11" obtained on the lens 52; the optical axis T1 of the light sources 5, constituted by LED, is perpendicular to the optical axis T of the device 1b" as a whole, coinciding with the optical axis of the small lenses 11"; consequently, according to the invention, the light sources 5 of each module M may be mounted with axis T1 of the sources themselves either parallel or perpendicular to the optical axis T of the optical systems which create the desired light distribution.

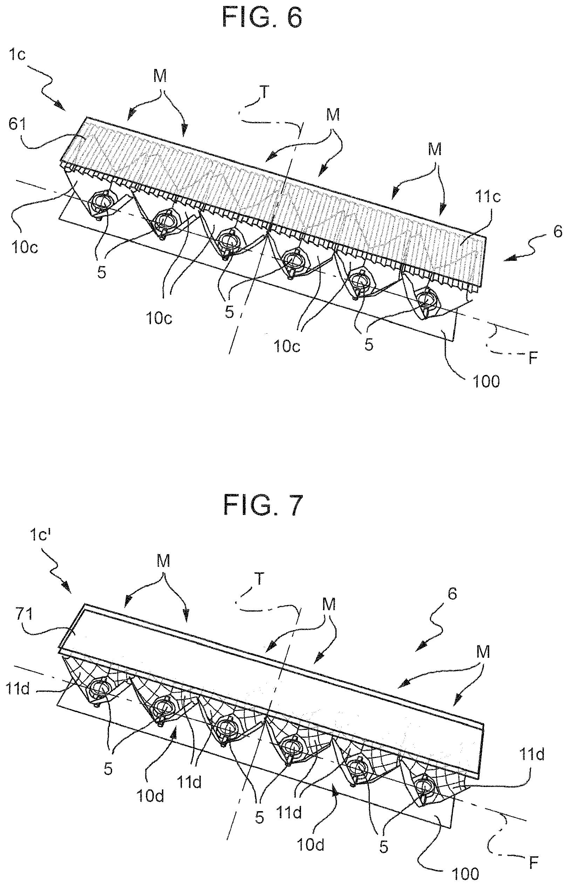

In figure 6 reference 1c indicates a DRL light device with a reflection optical system wherein the primary optical system is constituted by reflector 10c and an outer lens 61; the reflectors 10c provide a partially elongated horizontal distribution, while lens 61 is provided with variable angle prisms 11c made on lens 61 itself which complete the horizontal elongation of the distribution, thus obtaining a plurality of photometric projections of P3' type in figure 9.

Finally, figure 7 diagrammatically illustrates a DRL light device 1c' made with a reflection optical system wherein the primary optical system consists of reflectors 10d and an outer lens 71; the reflectors 10d are provided with variable geometry sectors 11d (complex optical system) which provide a horizontal elongated distribution as required to form the overall photometric projection P2 in figure 9.

In all illustrated embodiments, the light source 5 of each module 1 consists of at least one LED and all the LEDs of all modules M are carried by a single printed circuit 100 in common for all modules M. The number of modules M is variable according to the maximum desired installation angle α or β of the DRL on the vehicle, and may go from a minimum number of 2 modules M to a maximum number of 20 modules M for each device 1b or 1c.

For example, with reference to figures 10 and 11, for generating the overall photometric projection P2, a device such as that in figure 3 may be used but including four modules M, each of which generates a single photometric projection P2'a, P2'b, P2'c, P2'd, different from one another, but which are overlapped; the overlapping thereof creates the light distribution which provides the overall photometric projection P2 of the device 1b, which fulfils the standards because it includes the photometric projection P1 required by standards, by being overlapped thereon. Essentially, an overall photometric projection is generated according to the invention by the overlapping of the photometric projections created by the single modules M which is wider than that the required P1, and which respects, within the illustrated boundary of P1, the punctual intensities of the luminosity required for projection P1. Similarly, the overall photometric projection P2 wider than P1 and including P1, because totally overlapped thereon, may also be obtained (figure 11) by the overlapping of projections P2" all identical to one another and having in all cases a light intensity equal to one fourth than that required for P1; consequently, the overall projection P2 will respect the standards because it will cover the profile required by P1 and will have a punctual intensity, within the boundary of such a profile, equal to that required by standards.

The orientation variation of device 1b, 1c will consequently translate in use into a single translation of the profile P1 within the overall profile P2 or P3 generated by the device. It is thus obtained the desired technical effect at cost of a "waste" of light energy, which is sent by the modules M also where it is not needed. However, the modules M and their components, may be made in series, with consequent economies of scale and this widely compensates such a disadvantage and all the objects of the invention are thus reached.

## Claims

1. A lighting device (1b;1c), the lighting device being a DRL and the lighting device being of the type adapted to generate in use a first predetermined photometric projection (P2,P3) adapted to fulfill a predetermined light distribution law defined by a required photometric projection (P1) and comprising a plurality of modules (M), each of which comprising, in turn, a light source (5) and means (6) for distributing the radiation emitted by the light source so as to generate, for each module, a second predetermined photometric projection (P2'; P2"; P3') for each module; wherein said means (6) for distributing the light radiation of each module (M) are designed so that, in combination:
- the second predetermined photometric projection (P2';P2";P3') of each module (M) has, along at least one axis of a pair of orthogonal axes (C1,C2) defining the laying plane of said photometric projections (P2,P3), a width greater than the width required for the first photometric projection along such axis, according to said predetermined law, i.e. greater than the width of said required photometric projection;
- the second photometric projection (P2';P2";P3') generated by each module (M) always has a punctual intensity lower than that of the first photometric projection (P2,P3);
- the second photometric projections (P2';P2";P3') are at least partially overlapped in such a manner that all together the modules (M) generate the punctual intensity of the first photometric projection (P2,P3); **characterized in that** the means (6) for distributing the light radiation provide a DRL function by overlapping the second photometric projections (P2';P2";P3) of all the modules (M), i.e. a first photometric projection (P2,P3) adapted to meet the DRL standard, when the device (1b;1c) is mounted on a vehicle (2) within a predetermined range of possible angular orientations (α,β), which are different from one another, of the device itself with respect to a forward axis (A) of the vehicle.

2. A light device according to claim 1, **characterized in that** said predetermined range of angular orientations comprises mounting the device (1b) laying on a transversal plane to said forward axis (A) of the vehicle and inclined on such a plane, with respect to the horizontal, by an angle (α) between 0° and 180°.

3. A light device according to claim 1 or 2, **characterized in that** said predetermined range of angular orientations comprises mounting the device (1c) arranged laying on a plane transversal to the forward axis (A) of the vehicle and inclined with respect to a plane (B) orthogonal to the forward axis (A) of the vehicle by an angle (β) between 0° and 45°.

4. A light device according to one of the claims from 1 to 3, **characterized in that** it comprises a number of said modules (M) which depends on the maximum mounting inclination angle (α,β) of the device (1b;1c) on the vehicle (2).

5. A light device according to one of the preceding claims, **characterized in that** said means (6) for distributing the light radiation comprise first (10) and second (11) optical parts which form, in combination to one another, a desired light distribution adapted to generate said second photometric projection (P2';P2";P3') for each said module (M), said first and second optical parts (10,11) being chosen from the group consisting of: TIR optics, reflection optics, refraction optics, combinations thereof.

6. A light device according to claim 5, **characterized in that** the light sources (5) of each module (M) are mounted with the axis (T1) of the sources themselves either parallel or perpendicular to an optical axis (T) of the optical systems (11) which create the desired light distribution.

7. A light device according to one of the preceding claims, **characterized in that** said light source (5) is chosen from the group consisting in: at least one LED, an array of LEDs, white or yellow incandescent lamps.

8. A light device according to one of the preceding claims, **characterized in that** said first photometric projection (P2,P3) generated by the overlapping of all said second photometric projections of said modules (M) is wider than said required photometric projection (P1) and is overlapped on the same.

## Patentansprüche

1. Beleuchtungsvorrichtung (1b; 1c) mit Tagfahrlicht (DRL), welche geeignet ist, im Betrieb eine erste vorbestimmte photometrische Projektion (P2, P3) zu erzeugen, die wiederum geeignet ist, ein vorbestimmtes Lichtverteilungsgesetz zu erfüllen, das von einer erforderlichen photometrischen Projektion (P1) definiert wird; umfassend eine Vielzahl von Modulen (M), die wiederum jeweils eine Lichtquelle (5) und Vorrichtungen (6) zur Verteilung der von der Lichtquelle emittierten Strahlung umfassen, so dass für jedes Modul eine zweite vorbestimmte photometrische Projektion (P2'; P2"; P3') erzeugt wird; wobei die Vorrichtungen (6) zur Verteilung der Lichtstrahlung jedes Moduls (M) so konstruiert sind, dass in Kombination:
- die zweite vorbestimmte photometrische Projektion (P2'; P2"; P3') jedes Moduls (M) entlang mindestens einer Achse eines Paars orthogonaler Achsen (C1, C2), welche die Liegeebene der photometrischen Projektionen (P2, P3) definieren, eine Breite aufweist, die größer ist als die Breite, die gemäß dem vorbestimmten Gesetz für die erste photometrische Projektion entlang dieser Achse erforderlich ist, d. h. größer als die Breite der erforderlichen photometrischen Projektion;
- die von jedem Modul (M) erzeugte zweite photometrische Projektion (P2'; P2"; P3') stets eine niedrigere Punktintensität aufweist als die erste photometrische Projektion (P2, P3);
- die zweiten photometrischen Projektionen (P2'; P2"; P3') mindestens teilweise überlappt werden, dergestalt, dass alle Module (M) zusammen die Punktintensität der ersten photometrischen Projektion (P2, P3) erzeugen; **dadurch gekennzeichnet, dass** die Vorrichtungen (6) zur Verteilung der Lichtstrahlung durch die Überlappung der zweiten photometrischen Projektionen (P2'; P2"; P3') aller Module (M) eine DRL-Funktion bereitstellen, d.h. eine erste photometrische Projektion (P2, P3), die den DRL-Standard erfüllt, wenn die Vorrichtung (1b; 1c) innerhalb eines vorbestimmten Bereichs möglicher, voneinander verschiedener Winkelausrichtungen (α; β) der Vorrichtung in Bezug auf eine Vorwärtsachse (A) des Fahrzeugs an einem Fahrzeug (2) montiert ist.

2. Beleuchtungsvorrichtung nach Anspruch 1, **dadurch gekennzeichnet, dass** der vorbestimmte Bereich der Winkelausrichtungen das Montieren der Vorrichtung (1b) auf einer zu der Vorwärtsachse (A) des Fahrzeugs quer verlaufenden Ebene liegend umfasst und in Bezug auf die Horizontale in einem Neigungswinkel (α) auf dieser Ebene (B) zwischen 0° und 180°.

3. Beleuchtungsvorrichtung nach Anspruch 1 oder 2, **dadurch gekennzeichnet, dass** der vorbestimmte Bereich der Winkelausrichtungen das Montieren der Vorrichtung (1c) auf einer zu der Vorwärtsachse (A) des Fahrzeugs quer verlaufenden Ebene liegend umfasst und in Bezug auf eine Ebene (B) orthogonal zu der Vorwärtsachse (B) des Fahrzeugs in einem Neigungswinkel (β) zwischen 0° und 45°.

4. Beleuchtungsvorrichtung nach einem der Ansprüche 1 bis 3, **dadurch gekennzeichnet, dass** die Vorrichtung eine Anzahl der Module (M) umfasst, die von dem maximalen Montageneigungswinkel (α; β) der Vorrichtung (1b; 1c) an dem Fahrzeug (2) abhängt.

5. Beleuchtungsvorrichtung nach einem der vorstehenden Ansprüche, **dadurch gekennzeichnet, dass** das die Vorrichtungen (6) zur Verteilung der Lichtstrahlung erste (10) und zweite (11) optische Teile umfassen, die in Kombination miteinander eine gewünschte Lichtverteilung bilden, die geeignet ist, für jedes Modul (M) die zweiten photometrischen Projektionen (P2'; P2"; P3') zu erzeugen, wobei die ersten und zweiten optischen Teile (10, 11) ausgewählt sind aus der Gruppe, bestehend aus: TIR-Optik, Reflexionsoptik, Brechungsoptik und Kombinationen davon.

6. Beleuchtungsvorrichtung nach Anspruch 5, wobei **dadurch gekennzeichnet, dass** die Lichtquellen (5) jedes Moduls (M) mit der Achse (T1) der Lichtquellen entweder parallel oder senkrecht zu einer optischen Achse (T1) des optischen Systems (11) montiert sind, wodurch die gewünschte Lichtverteilung erzeugt wird.

7. Beleuchtungsvorrichtung nach einem der vorstehenden Ansprüche, **dadurch gekennzeichnet, dass** die Lichtquelle (5) ausgewählt ist aus der Gruppe, bestehend aus: mindestens einer LED, einer Reihe von LEDs, weißen oder gelben Glühlampen.

8. Beleuchtungsvorrichtung nach einem der vorstehenden Ansprüche, **dadurch gekennzeichnet, dass** die erste photometrische Projektion (P2, P3), die durch die Überlappung aller zweiter photometrischer Projektionen der Module (M) erzeugt wird, breiter ist als die erforderliche photometrische Projektion (P1) und auf dieser überlappt wird.

## Revendications

1. Dispositif d'éclairage (1b ; 1c), le dispositif d'éclairage étant une DRL et le dispositif d'éclairage étant du type conçu pour générer, en utilisation, une première projection photométrique (P2, P3) prédéterminée conçue pour satisfaire à une loi de distribution de lumière prédéterminée définie par une projection photométrique (P1) requise et comprenant une pluralité de modules (M), chacun d'eux comprenant, à son tour, une source de lumière (5) et des moyens (6) pour distribuer le rayonnement émis par la source de lumière de manière à générer, pour chaque module, une deuxième projection photométrique (P2' ; P2" ; P3') prédéterminée pour chaque module ; dans lequel lesdits moyens (6) pour distribuer le rayonnement de lumière de chaque module (M) sont conçus de sorte que, en combinaison :
- la deuxième projection photométrique (P2' ; P2" ; P3') prédéterminée de chaque module (M) ait, le long d'au moins un axe d'une paire d'axes orthogonaux (C1, C2) définissant le plan de pose desdites projections photométriques (P2, P3), une largeur supérieure à la largeur requise pour la première projection photométrique le long de cet axe, conformément à ladite loi prédéterminée, c'est-à-dire supérieure à la largeur de ladite projection photométrique requise ;
- la deuxième projection photométrique (P2' ; P2" ; P3') générée par chaque module (M) ait toujours une intensité ponctuelle inférieure à celle de la première projection photométrique (P2, P3) ;
- les deuxièmes projections photométriques (P2' ; P2" ; P3') soient au moins partiellement superposées d'une manière telle que, tous ensemble, les modules (M) génèrent l'intensité ponctuelle de la première projection photométrique (P2, P3) ;
**caractérisé en ce que** les moyens (6) pour distribuer le rayonnement de lumière réalisent une fonction de DRL en superposant les deuxièmes projections photométriques (P2' ; P2" ; P3') de tous les modules (M), c'est-à-dire une première projection photométrique (P2, P3) conçue pour satisfaire à la norme de DRL, lorsque le dispositif (1b ; 1c) est monté sur un véhicule (2) dans une plage prédéterminée d'orientations angulaires possibles (α, β), qui sont différentes les unes des autres, du dispositif lui-même par rapport à un axe vers l'avant (A) du véhicule.

2. Dispositif d'éclairage selon la revendication 1, **caractérisé en ce que** ladite plage prédéterminée d'orientations angulaires comprend le montage du dispositif (1b) reposant sur un plan transversal audit axe vers l'avant (A) du véhicule et incliné sur un tel plan, par rapport à l'horizontale, d'un angle (α) entre 0° et 180°.

3. Dispositif d'éclairage selon la revendication 1 ou 2, **caractérisé en ce que** ladite plage prédéterminée d'orientations angulaires comprend le montage du dispositif (1c) agencé reposant sur un plan transversal à l'axe vers l'avant (A) du véhicule et incliné par rapport à un plan (B) orthogonal à l'axe vers l'avant (A) du véhicule d'un angle (β) entre 0° et 45°.

4. Dispositif d'éclairage selon l'une des revendications 1 à 3, **caractérisé en ce qu'**il comprend un nombre desdits modules (M) qui dépend de l'angle d'inclinaison de montage maximum (α, β) du dispositif (1b ; 1c) sur le véhicule (2).

5. Dispositif d'éclairage selon l'une des revendications précédentes, **caractérisé en ce que** lesdits moyens (6) pour distribuer le rayonnement de lumière comprennent des première (10) et deuxième (11) parties optiques qui forment, en combinaison l'une avec l'autre, une distribution de lumière souhaitée conçue pour générer ladite deuxième projection photométrique (P2' ; P2" ; P3') pour chaque dit module (M), lesdites première et deuxième parties optiques (10, 11) étant choisies dans le groupe consistant en : une optique TIR, une optique de réflexion, une optique de réfraction, des combinaisons de celles-ci.

6. Dispositif d'éclairage selon la revendication 5, **caractérisé en ce que** les sources de lumière (5) de chaque module (M) sont montées avec l'axe (T1) des sources elles-mêmes soit parallèle, soit perpendiculaire à un axe optique (T) des systèmes optiques (11) qui créent la distribution de lumière souhaitée.

7. Dispositif d'éclairage selon l'une des revendications précédentes, **caractérisé en ce que** ladite source de lumière (5) est choisie dans le groupe consistant en : au moins une DEL, un réseau de DEL, des lampes à incandescence blanches ou jaunes.

8. Dispositif d'éclairage selon l'une des revendications précédentes, **caractérisé en ce que** ladite première projection photométrique (P2, P3) générée par la superposition de toutes lesdites deuxièmes projections photométriques desdits modules (M) est plus large que ladite projection photométrique (P1) requise et est superposée à celles-ci.
